# EUROPEAN PATENT SPECIFICATION

(11) **EP 0 277 683 B1**
(45) Date of publication and mention of the grant of the patent: **28.04.1993**
(21) Application number: 88200118.3
(22) Date of filing: 25.01.1988
(51) Int. Cl.: C03B 23/035, C03B 35/24, C03B 27/04, C03B 35/20, B65G 47/91, B65G 49/06

(54) **Process and device for applying forces to glass sheets, in particular at a high temperature**
Verfahren und Vorrichtung zur Anwendung von Kräften auf Glasscheiben, insbesondere bei hoher Temperatur
Procédé et appareil pour appliquer des forces à des feuilles de verre, en particulier à haute température

(30) Priority: 03.02.1987 IT 4040487
(43) Date of publication of application: 10.08.1988
(73) Proprietor: SOCIETA' ITALIANA VETRO- SIV-SpA, 66050 San Salvo (Chieti) (IT)
(72) Inventor: Carlomagno, Giovanni Maria, I-80126 Napoli (IT)
(74) Representative: De Carli, Erberto

(56) References cited:
- FR-A- 1 400 501
- US-A- 3 455 670
- US-A- 3 866 875
- US-A- 4 578 103

## Description

The present invention is concerned with a process, and the related device, for topside handling glass sheets without physical contact. The invention relates in particular to handling glass sheets at high temperature in the operations of processing of the same glass sheets, and more specifically in the steps of cutting, grinding, transfer, heating, cooling, bending at a high temperature, and tempering.

The process and the related device can be applied in particular in the manufacturing of glass sheets for vehicles in general, or specifically of car windows, of either tempered or laminated type.

These glass sheets must be generally manufactured with a high accuracy, both as regards their end geometry (wherein very narrow tolerances are allowed), and as regards the absence of optical distorsions or of any kinds of scratches. The absence of scratches is very important not only in the glass sheets, but also in any layers bonded to them such as metal coatings, silk-printed patterns of heated backwindows, black or coloured stripes, trademarks, and so forth.

The dimensional accuracy and the absence of distorsions and/or scratches in the glass sheets require that the glass sheets are treated with great care during the processing steps, above all at high temperatures, when the glass is in a more easily deformable condition, because of the decrease in its viscosity.
The thinner the glass sheet, the greater the possibility for it to be deformed. In fact, the resistance of the glass sheet to the deformations deriving from bending or twisting loads (which are the prevailing loads) is approximaterly proportional to the third power of its thickness. Car manufacturers have recently increased the demand for thinner and thinner glass sheets, so that the manufacturers of these latter had to tackle the problem of their high deformability at a high temperature.

Every time the glass sheet comes into contact with solid walls (such as the clamps of the vertical furnaces, the conveyor rolls of horizontal furnaces, the forming ring and/or mould, the vacuum-sucking holder plates), both deformations localized in the contact points, and/or abrasions of the deposited layers possibly present on them are possible.
US-A-4 578 103 discloses a topside transfer apparatus for transferring glass sheets during processing, which supports glass sheets at a downwardly facing surface by a vacuum drawn through a first set of holes in the surface and by pressurized gas supplied through a second set of holes in the surface. Proper spacing between said surface and the supported glass sheet, so as to avoid surface to surface contact and to properly support the glass sheet, is provided by means of a control unit which controls the relative extents of the vacuum and pressurized gas. In this apparatus not only separate vacuum and pressure blowers are needed, but their operation has to be properly coordinated by said control unit, such control being rather critical to ensure the necessary stable equilibrium between the weight of the sheet, the pressure of the cushion between the surface of the sheet and the facing surface of the apparatus and the counterpressure on the side of the sheet away from the apparatus.
A similar method and apparatus for support of sheet material is disclosed in US-A-3 866 875. This apparatus includes a plate with a lower surface adjacent the sheet to be supported and with rows of exhaust ports and inlet ports. Each of said ports is partially obturated by a stopper and the stoppers in the inlet bores are of a different size from those in the exhaust ports so as to create different pressure changes in said inlet and exhaust ports.
A further similar method and device for controlled attraction of sheet material are known from FR-A-1 400 501. Also this method and device operate on the basis of the same main principle as the former, i.e. to draw a vacuum through exhaust ports and simultaneously to supply pressurized gas through inlet ports from and respectively into the space between the active facing surface of the attraction device and the upper surface of the sheet material to be supported from topside.
According to the present invention on the contrary, a process and a device are proposed which do not need any vacuum to be drawn from the gap between the facing surface of the handling device and the upper surface of the glass sheet to be handled.
This is possible by making use of the Bernoulli law.

Consequently, the invention provides a process according to claim 1 and a device according to claim 4. Advantageous embodiments of the invention are defined in dependent claims 2, 3 and 5 to 12.

By "average gas flow pressure lower than atmospheric pressure" it is meant that the pressure integral extended to the surface area between the wall of the handling device and the glass sheet (including the gas feed bore) is smaller than the product of said surface area by the atmospheric pressure. Under conditions of gravity force balancing, the difference between these two amounts equals the same gravity force. If, by starting from these conditions, the wall of the handling device is shifted upwards, in said gap a pressure level is reached which is lower than the previous one, and therefore to the glass sheet a greater suction force is applied.

The present invention will be explained in more detail in the following disclosure relating to forms of practical embodiment thereof, with particular reference to the hereto attached drawing tables, wherein:
Figure 1 shows a handling device in its simplest form of practical embodiment, in the nearby of the glass sheet.
Figure 2 shows the view of the handling device along the path II-II of Figure 1.
Figure 3 is a chart qualitatively showing the behaviour of the gas flow velocity inside the gap between the handling device and the glass sheet.
Figure 4 is a chart qualitatively showing the behaviour of the absolute pressure inside said gap and under the glass sheet.
Figure 5 shows a sectional view of a form of practical embodiment of the device.
Figure 6 shows a sectional view of a form of practical embodiment of the gas feed bore.
Figure 7 shows a sectional view of a form of practical embodiment of the gas feed to said gap.
Figures 8a, 8b, and 8c show sectional views of further forms of practical embodiment of the gas feed bore.
Figure 9 shows a handling device comprising a plurality of bodies.
Figure 10 shows the sectional view along path X-X of Figure 9.
Figure 11 shows a handling device, which makes it possible the glass sheet to be picked from conveyor rolls and to be bent.

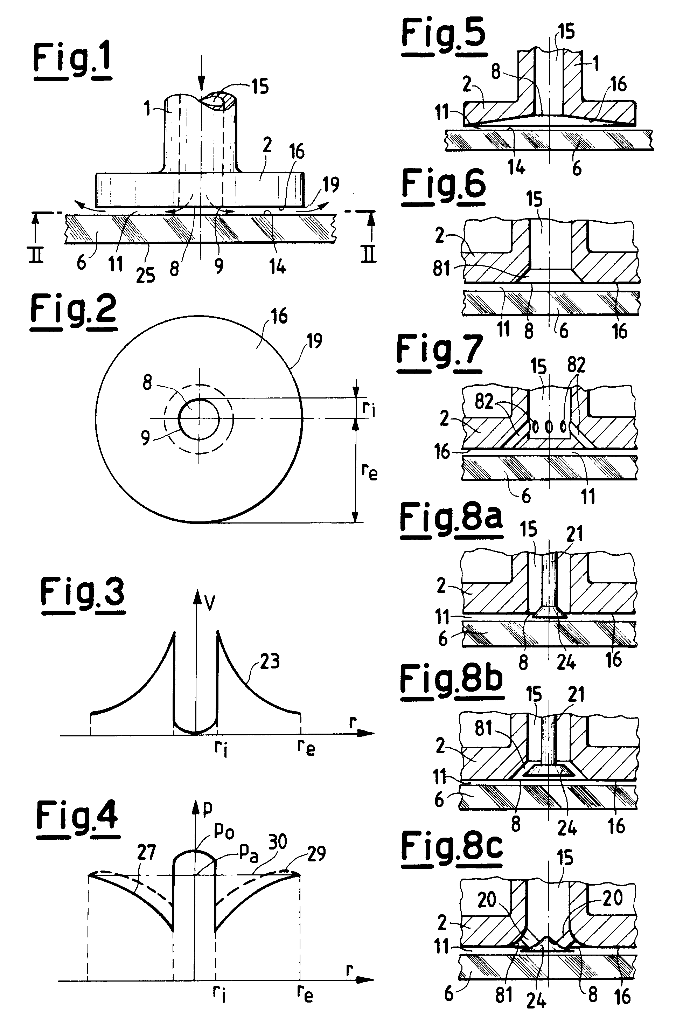

Figures 1 and 2 show the handling device of the invention in its simplest form of practical embodiment, wherein the body of the device is constituted by a flat circular flange 2 having a facing surface 16 provided with a feed bore 8 located in the nearby of its centre, through which a gas stream is blown. The gas stream is fed through a duct 15 provided inside a stem 1 rigidly connected with the flange 2. The outer diameter of said stem 1 can be larger than, smaller than, or equal to the diameter of the flange 2. If the gas flow pressure pₒ (Figure 4) inside the feed duct 15 is high enough and the distance between the facing surface 16 of flange 2 and the upper surface 14 of the glass sheet 6 is short enough, the weight of the glass sheet 6 can be balanced by the pressure lower than atmospheric pressure which is generated inside the gap 11 between said surfaces 14 and 16 and a suction force is applied to the glass sheet.

The reason for this is the following.

Inasmuch as the gap 11 has a very small thickness (which experimentally results to be of the order of a few tenths of a millimeter), the velocity of the gas stream leaving the feed duct 15 and entering the gap 11 in the nearby of the circumference 9 of the bore 8 in the facing surface 16 (located at the distance rᵢ from the axis of the bore 8) drastically increases due to the sudden decrease of the cross section of the gas stream. The arrows inside the gap show the direction of gas flow. The curve 23 of the chart of Figure 3 (which qualitatively indicates the behaviour of the gas velocity V as a function of the distance r from the axis of the bore 8) shows that, as the gas stream flows from said circumference 9 towards the free peripheric circumference 19 of the flange 2 placed at the distance rₑ from the axis of the bore 8 and in communication with atmospheric pressure, the velocity of the same gas stream then decreases, because the cross section of the gas flow progressively increases. Therefore, if the pressure losses of the gas flow inside the gap 11 are smaller than the pressure recovery due to the decrease in its velocity, the gas flow inside the gap 11 is at a pressure which, on the average, is lower than atmospheric pressure. This can be observed from the solid-line curve 27 of the chart of Figure 4, which qualitatively shows the behaviour of the pressure p of the gas flow as a function of the radial distance r. Figure 4 furthermore shows the behaviour of pressure inside the gap 11 in case higher pressure losses occur (dashed-line curve 29), the value of the atmospheric pressure pₐ (dashed/dotted-line curve 30) acting on the lower face 25 of the glass sheet 6 and the value pₒ of the gas feed pressure which is reached in correspondence of the axis of the bore 8, wherein the gas velocity is practically zero. The distribution of the pressure values on the two faces 14 and 25 of the glass sheet (curves 27 and 30) show that, even if in the nearby of the circumference of bore 8 a force exists, which pushes the glass sheet downwards (p larger than pₐ), the difference between the atmospheric pressure and the pressure inside the gap 11 can balance both this force and the weight of the glass sheet. Thus, suction force is applied to the glass sheet. This is true also in case of a curve of the type indicated by the reference numeral 29, provided that the integral of the pressure, extended to the whole surface 14 of the glass sheet 6, generates a resulting force directed upwards, i.e. the pressure applied to the glass sheet by the handling device is on the average lower than atmospheric pressure. In order that the described phenomenon occurs it is important that the said distance rₑ be substantially greater than the said distance rᵢ.

The phenomenology is slightly more complex if the radial symmetry is absent (i.e., the flange 2 and/or the bore 8 are not circular), or the gas flow is supersonic, with the possible presence of shock waves. However, it was found that, if the geometry of the device is not very different from that described, and if the gas feed pressure pₒ is high enough, the resulting effect is practically the same.

Furthermore, it should be observed that the suction force applied to the glass sheet 6 is generally stable because small increases in the distance between the surfaces 16 and 14 (e.g. downwards movements of the glass sheet) increase the depressure level inside the gap 11 (i.e. the suction force acting on the glass sheet tends to bring it back upwards) and vice-versa. The stability is mainly bound to the pressure losses occurring in the gas flow inside the gap 11.

The suction force does not exist if the distance between the surfaces 14 and 16 of Figure 1 is long. In that case, the gas jet entering the gap 11 pushes down the glass sheet 6. The topside support takes place only when such distance is shorter than a certain value which is, above all, a function of the geometry of the device.

Figure 5 shows a form of practical embodiment of the handling device of Figure 1, characterized in that the facing surface 16 of the flange 2, although being nearly flat, is not perfectly parallel to the upper surface 14 of the glass sheet 6, but has a slightly cone-frustum shape. In fact, it can be advantageous to give the whole facing surface 16, or a portion thereof, a slightly cone-frustum shape, or, generally, a non-flat shape (i.e., with a prefixed outline), both in order to optimize the pressure distribution on the glass sheet, and to decrease the pressure losses. The process according to the invention is based on the fact that the cross section through which the gas flows inside the gap 11 increses on the average in the direction of flow in such a way as to make it possible the gas velocity to decrease and a consequent recovery of pressure to be achieved. Therefore, also non-circular bores and/or flanges are possible; in particular, the flange and/or the bore can have a polygonal or elliptical shape.

Figure 6 shows a form of practical embodiment of a gas feed bore 8 having a cone-frustum chamfer 81, which improves the gas flow entry in the gap 11. Other shapes are possible for the chamfer, in order to improve such gas entry, an example thereof is the rounded chamber of Figure 8c.

Figure 7 shows another form of practical embodiment of the gas feed to the gap 11 in which a plurality of gas feed channels 82 are provided which branch off the main feed duct 15. This form of practical embodiment, like those relating to the following Figures 8a, 8b and 8c, shows the advantage that the gas stream is better distributed inside the gap 11. The channels 82 can be inclined relatively to the axis of the feed duct 15, as shown in Figure 7, or they can be parallel, or even skew, to it.

When the handling device is approached towards the glass sheet 6, i.e. before the gas flow inside the gap 11 and the consequent suction force are generated, from the gas feed bore 8 a gas jet escapes, which impinges perpendicularly onto the glass sheet 6. This fact can be undesired both because - if the bore 8 has a relatively large diameter - the gas flow rate is large, and because - if the glass sheet 6 is hot (as it occurs when leaving a furnace) - the gas jet can deform it, and/or intensely cool it.

Figures 8a, 8b and 8c show that these drawbacks can be overcome by placing in the nearby of the gas feed bore 8 (either chamfered or not), a gas diverting baffle 24, in order to limit the gas flow rate and/or generate an annular stream, which does not directly impinge onto the glass sheet 6, but tends already since the beginning to lap the facing surface 16. The diverting baffle 24 can be located both lined-up with and above (Figure 8b), or under (Figures 8a and 8c) the gas feed bore 8, and can be supported by a support 21 shown in Figures 8a and 8b, or by spokes 20 shown in Figure 8c. The baffle 24 can be shifted, e.g. by moving the support 21 in order to regulate the suction force applied to the glass sheet, in particular during the glass sheet release step. A correct fluidodynamic design of the baffle 24 can decrease the force which pushes downwards the glass sheet 6 in correspondence of the bore 8 (see Figure 4), or it can even generate in this region a pressure which is lower than the atmospheric pressure.

According to a different form of practical embodiment, not shown in the figures, the baffle 24 can extend to the whole cross section area of the bore 8, provided that it is wholly or partially realized from a porous material, which allows the gas stream to pass through it.

Practical tests demonstrated that the structural solution according to Figure 8b is particularly advantageous as it permits a pressure lower than the atmospheric pressure to be established in the area under the diverting baffle 24, besides limiting the gas flow rate before the suction force is established.

An example of practical embodiment of the device of Figures 1 and 2 with the gas feed bore 8 shown in Figure 8b had the following geometry:

| | |
|---|---|
| - outer radius rₑ of the flange 2 | 44 mm; |
| - radius of the cone-frustum shaped chamfer 81 on the facing surface 16 | 29.5 mm; |
| - longer diameter of the diverting baffle 24 | 58.6 mm; |
| - angle between the cone-frustum shaped chamfer 81 and the facing surface 16 of the flange 2 | 29°; |
| - angle of the diverting baffle 24 relatively to its lower face | 24°. |

The diverting baffle 24 can be mounted both with its lower face being lined-up with the facing surface 16, and slightly above, or slightly under it, by a few tenth of a millimeter.
When the lower face of the diverting baffle 24 is placed at 0.1 mm below the facing surface 16, the handling device is capable of safely supporting, from atop, a circular glass sheet 6 having a diameter of 100 mm and a weight of 90 g, with a flow rate of room-temperature air slightly larger than 4 m³/hour, fed under a pressure pₒ of approximately 0.1 atm gauge.

Under these conditions, the thickness of the gap 11 results to be of approximately 0.25 mm.

In case of an air feed pressure twice as large as above indicated, the glass sheet is still supported by the handling device (with a greater reliability), and the thickness of the air gap 11 results of approximately 0.20 mm.

For still higher air supply pressures, the reliability of glass sheet support furthermore increases (in the meaning that random forces which may add to the force of gravity will not cause loss of support and fall of the glass sheet) and the thickness of the gap slightly decreases.

Under all the above reported operating conditions, the region of the gap 11 lying under the diverting baffle 24 is actually at a pressure lower than atmospheric pressure. Such sub-atmospheric pressure is the higher, the higher is the gas supply pressure pₒ.

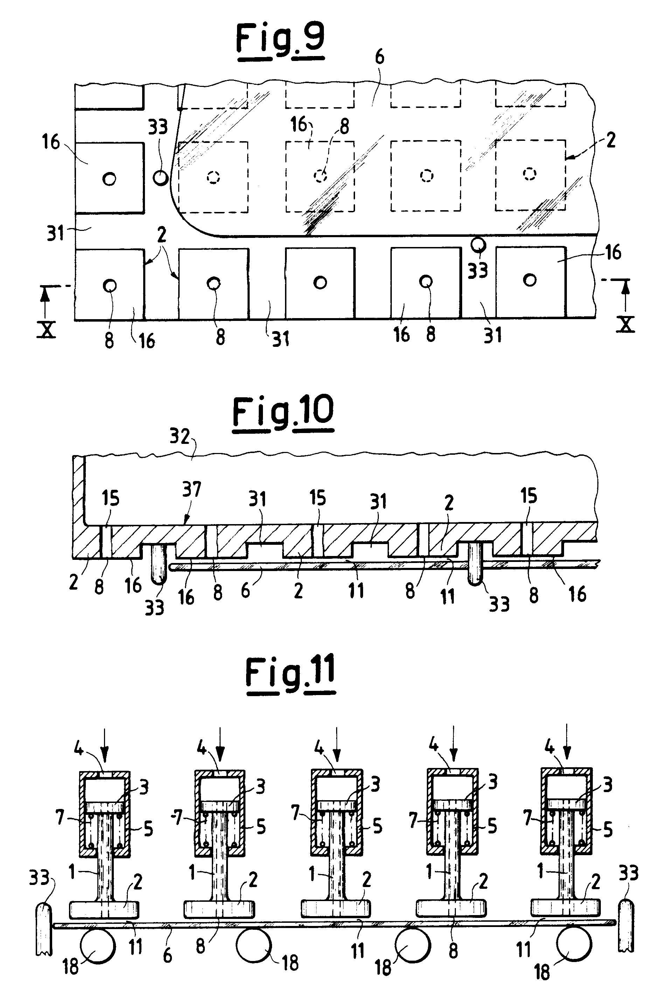

Figures 9 and 10 show a handling device having a plate 37, in which a plurality of bodies 2 is provided. Above the plate 37 a gas supply chamber 32 is present which can be replaced by a set of pipes, not shown in the figures, which feed the ducts 15. Figure 9 shows that in this case the bodies 2 have a square shape and that between the peripheric circumference of them gas venting channels 31 are formed which communicate with atmospheric pressure. The number of bodies 2 is greater than the number necessary for supporting the glass sheet 6 shown in Figure 9, to make it possible the equipment to be used also in case of larger glass sheets. The facing surfaces 16 of all bodies 2 are coplanar. The suction force is only applied when the glass sheet 6 is very close to the plate 37 and when gas streams are blown through the feed bores 8, which gas streams can also be fed in a non uniform way. The release of the glass sheet 6 takes place by decreasing the gas flow rate through the bores 8, or by reducing it to zero. If the glass sheet 6 is hot, the blown gas can be heated in its turn to a suitable temperature, in order to prevent it from cooling.

The handling devices so far described have always been shown in a horizontal position. However it is not compulsory for the handling device to be located in such a position, with its facing surface 16 being horizontal. The facing surface 16 of the handling device can be inclined and the whole device can be movable. However, in case of a position even slightly inclined relatively to the horizontal, the handling device balances with its suction force only the component of the force of gravity which is perpendicular to the facing surface 16, because in the tangential direction (parallel to said facing surface),the handling device is unable to exert any forces. In order to balance the tangential component other forces are therefore necessary, which in the case of the embodiment shown in Figures 9 and 10 are applied by stop elements 33 associated with the plate 37 whose purpose is of not allowing the glass sheet 6 to slip laterally. The stop elements 33 can be fixed or movable in a direction perpendicularly and/or parallel to the plane of the facing surfaces 16 of the bodies 2.

Figure 11 shows an example of practical embodiment of a handling device comprising a set of bodies 2, which make it possible a hot glass sheet to be picked from conveyor rolls, to be bent and to be possibly cooled. The glass sheet 6, coming from an oven not shown in the Figure moves on rolls 18 revolving about their axis, until it comes to the position shown in Figure 11. When the glass sheet 6 reaches this position the rolls 18 stop. Almost simultaneously from below the stop elements 33 move upwards and the delivery of gas (in this case, hot gas) to various pneumatic cylinders 5 through bores 4 is started. Thus a thrust is applied to the pistons 3 of the cylinders 5, which by means of their stems 1 lower the bodies (flanges) 2 until these latter come close to the glass sheet 6. In the meantime, gas streams flow out through the bores 8 of the flanges 2 which communicate with the relative bores 4 through the axially bored pistons 3, stems 1 and flanges 2, so as to allow the gas streams to reach the gap 11 and to provide the suction forces to be applied to the glass sheet 6. Springs 7 contained inside the cylinders 5 serve to initially keep the flanges 2 in a lifted position to make it possible the glass sheet 6 to slide below the flanges 2 before the support of the glass sheet takes place. The lowering of the flanges 2 can be controlled, according to a different form of practical embodiment not shown in figure, by adequate mechanisms. To facilitate the support of the glass sheet by means of the handling device supplementary gas jets through the free spaces between the rolls 18 can be directed on the lower face of the glass sheet 6. Once the glass sheet 6 is supported by the handling device, it can be lifted by means of mechanisms not shown in figure, making the flanges 2 uniformly translate upwards. Furthermore, by providing said flanges with translational and revolutionary movements different from one another, it is possible to bend the glass sheet above the conveyor rolls 18 until it reaches a desired shape which is different from the nearly flat initial shape. Now it is possible as well, whenever necessary, to blow gas at a lower temperature, such to partially cool down the glass sheet and consolidate its shape to a larger or smaller extent, before releasing it. As an alternative, or simultaneously, the device can move the glass sheet to a tempering area.

## Claims

1. Process for topside handling glass sheets without physical contact by means of a handling device comprising at least one body (2) having a wall provided with a facing surface (16), a free peripheric circumference (19) and at least one feed duct (15) to feed a stream of gas or vapour under pressure to a bore (8) in said facing surface (16), said process comprising the steps of closely approaching said facing surface (16) of the handling device to the upper surface (14) of the glass sheet (6) to establish a gap (11) of small thickness between said surfaces (14, 16), and directing a gas stream under pressure through said duct (15) and said bore (8) against the upper surface (14) of the glass sheet (6), characterised in that, due to the sudden decrease of the cross section of the gas stream leaving said feed duct (15) and entering said gap (11) through said bore (8) in the facing surface (16), the velocity of the gas stream is drastically increased, with a resulting drastic decrease of the gas flow pressure, and that the gas stream is then allowed to flow through said gap (11) towards the circumference of the body (2) which communicates with atmospheric pressure, whereby the gas flow pressure increases to atmospheric pressure as the cross section of the gas flow increases, with a resulting decrease of its velocity, and whereby inside said gap (11) an average gas flow pressure is established which is lower than atmospheric pressure, so that a suction force is applied to the glass sheet (6) by the handling device.

2. Process according to claim 1, characterized in that a gas under pressure, particularly compressed air, is used having a temperature different from the temperature of the glass sheet to be handled.

3. Process according to claim 1, characterized in that on the lower face of the glass sheet supplementary gas jets are directed.

4. Device for topside handling glass sheets to implement the process according to one or more of the preceding claims, comprising at least one body (2) having a wall provided with a facing surface (16), a free peripheric circumference (19) and at least one feed duct (15) to feed a stream of gas or vapour under pressure to a bore (8) in said facing surface (16), characterized in that the distance (rₑ) between the axis of said bore (8) and the peripheric circumference (19) of said facing surface (16) of the body (2) is substantially greater than the distance (rᵢ) between said axis of the bore (8) and the circumference (9) of the bore (8) and that the peripheric circumference (19) is in free communication with atmospheric pressure, the device further comprising means for lowering and raising said body (2).

5. Device according to claim 4, characterized in that said body is a flange (2) having a bore (8) located in the nearby of the centre of its facing surface (16).

6. Device according to claim 5, characterized in that the facing surface (16) of the flange (2) is flat or has a slightly cone-frustum shape.

7. Device according to claim 5, characterized in that the flange (2) and/or the bore (8) have a circular or a polygonal or an elliptical shape.

8. Device according to claim 4, characterized in that the bore (8) has a cone-frustum chamfer (81).

9. Device according to claim 8, characterized in that in the nearby of the bore (8) a diverting baffle (24) is placed.

10. Device according to claim 4, characterized in that in a plate (37) a plurality of bodies (2) are provided, that between the peripheric circumferences of said bodies (2) gas venting channels (31) communicating with atmospheric pressure are formed and that the facing surfaces (16) of the bodies (2) are coplanar.

11. Device according to claim 10, characterized in that associated with the said plate (37) stop elements (33) are provided to act on the sides of the sheet to be handled, said stop elements (33) being fixed or movable in a direction perpendicularly and/or parallel to the plane of the facing surfaces (16) of the bodies (2).

12. Device according to claim 4, characterized in that a set of bodies (2) is provided, each of said bodies being formed on the end of the stem (1) of a piston (3) movable in a pneumatic cylinder (5), said stem (1) and said piston (3) being hollow in order to establish a communication between the bore (8) of the body (2) and a first chamber of the cylinder (5) opposite the chamber in which said stem (1) is movable and in which a counter-pressure means (7) is inserted, said first chamber of said cylinder (5) being feedable with gas under pressure.

## Patentansprüche

1. Verfahren zum Handhaben von Glasscheiben ohne physische Berührung mit ihnen mit Hilfe einer Handhabungsvorrichtung, die wenigstens ein Gehäuse (2) umfaßt, das eine Stirnfläche (16) hat, einen freien Umfangsrand (19) und wenigstens eine Zuführleitung (15) zum Zuführen eines Stromes von Gas oder Dampf unter Druck zu einer Bohrung (8) in der Stirnfläche (16), wobei das Verfahren die Schritte des nahen Heranführens der Stirnfläche (16) der Handhabungsvorrichtung an die Oberfläche (14) der Glasscheibe (6) umfaßt, um eine Lücke (11) geringer Dicke zwischen den Flächen (14) und (16) zu bilden sowie das Hindurchschicken eines Gasstromes unter Druck durch die Zuführleitung (15) und die Bohrung (8) gegen die Oberflächen (14) der Glasscheibe (6), dadurch **gekennzeichnet,** daß aufgrund des plötzlichen Abfalles des Querschnittes des Gasstroms, der die Zuführleitung (15) verläßt und durch die Bohrung (8) in der Stirnfläche (16) in die Lücke (11) eintritt, die Geschwindigkeit des Gasstromes drastisch ansteigt mit einem daraus folgenden, drastischen Abfall des Gasströmungsdruckes und daß es dem Gasstrom dann ermöglicht wird, durch die Lücke (11) in Richtung auf den Umfang des Gehäuses (2) zu fließen, der mit dem Atmosphärendruck in Verbindung steht, wobei der Gasströmungsdruck auf den Atmosphärendruck in dem Maße ansteigt, in dem der Querschnitt der Gasströmung zunimmt, was zu einem Abfall seiner Geschwindigkeit führt und wobei innerhalb der Lücke (11) ein Durchschnitts-Gasströmungsdruck aufgebaut wird, der niedriger ist, als der Atmosphärendruck, so daß durch die Handhabungvorrichtung eine Saugkraft auf die Glasscheibe (6) ausgeübt wird.

2. Verfahren nach Anspruch 1, dadurch gekennzeichnet, daß ein Gas unter Druck, insbesondere komprimierte Luft, verwendet wird, das eine Temperatur hat, die von der zu behandelnden Glasscheibe abweicht.

3. Verfahren nach Anspruch 1, dadurch gekennzeichnet, daß zusätzliche Gasströme auf die Unterseite der Glasscheibe gerichtet werden.

4. Vorrichtung zum Handhaben von Glasscheiben zur Durchführung des Verfahrens nach einem oder mehreren der vorangegangenen Ansprüche, mit wenigstens einem Gehäuse (2), das eine Wand mit einer Stirnfläche (16) hat, einen freien Umfangsrand (19) und wenigstens eine Zuführleitung (15), um einen Gas- oder Dampfstrom unter Druck zu einer Bohrung (8) in der Stirnfläche (16) zu leiten, dadurch **gekennzeichnet,** daß der Abstand (Rₑ) zwischen der Achse der Bohrung (8) und dem Umfangsrand (19) der Stirnfläche (16) des Gehäuses (2) wesentlich größer ist als der Abstand (rᵢ) zwischen der Achse der Bohrung (8) und dem Umfang (9) der Bohrung (8) und daß der Umfangsrand (19) in freier Verbindung mit dem Atmosphärendruck steht, wobei die Vorrichtung ferner Mittel zum Absenken und Anheben das Gehäuses (2) aufweist.

5. Vorrichtung nach Anspruch 4, dadurch gekennzeichnet, daß das Gehäuse ein Flansch (2) ist, der eine Bohrung (8) hat, die nahe am Mittelpunkt seiner Stirnfläche (16) liegt.

6. Vorrichtung nach Anspruch 5, dadurch gekennzeichnet, daß die Stirnfläche (16) des Flansches (2) eben oder leicht kegelstrumpfförmig ist.

7. Vorrichtung nach Anspruch 5, dadurch gekennzeichnet, daß der Flansch (2) und/oder die Bohrung (8) eine kreisrunde oder eine polygonale oder eine elliptische Form haben.

8. Vorrichtung nach Anspruch 4, dadurch gekennzeichnet, daß die Bohrung (8) eine kegelstumpfförmige Abschrägung (81) aufweist.

9. Vorrichtung nach Anspruch 8, dadurch gekennzeichnet, daß nahe der Bohrung (8) eine Abdeckplatte (24) angeordnet ist.

10. Vorrichtung noch Anspruch 4, dadurch gekennzeichnet, daß in einer Platte (37) mehrere Gehäuse (2) vorgesehen sind, daß zwischen den Umfangsrändern der Gehäuse (2) Gasentlüftungskanäle (31) ausgebildet sind, die mit dem Atmosphärendruck in Verbindung stehen und daß die Stirnflächen (16) der Gehäuse (2) coplanar sind.

11. Vorrichtung nach Anspruch 10, dadurch gekennzeichnet, daß der Platte (37) Anschlagelemente (33) zugeordnet sind, um auf die Seitenkanten der zu handhabenden Scheiben einzuwirken, wobei die Anschlagelemente (33) in einer Richtung fest oder beweglich angebracht sind, die senkrecht und/oder parallel zu der Ebene der Stirnflächen (16) der Gehäuse (2) liegt.

12. Vorrichtung nach Anspruch 4, dadurch gekennzeichnet, daß ein Satz von Gehäusen (2) vorgesehen ist, wobei jedes dieser Gehäuse auf dem Ende einer Kolbenstange (1) eines Kolbens (3) angeformt ist, der in einem pneumatischen Zylinder (5) beweglich ist, wobei die Kolbenstange (1) und der Kolben (3) hohl sind, um eine Verbindung zwischen der Bohrung (8) des Gehäuses (2) und einer ersten Kammer des Zylinders (5) herzustellen, die gegenüber derjenigen Kammer liegt, in der die Kolbenstange (1) beweglich angeordnet ist und in der ein Gegendruckmittel (7) eingesetzt ist, wobei der ersten Kammer des Zylinders (5) ein Gas unter Druck zuführbar ist.

## Revendications

1. Procédé pour manutentionner par le côté de dessus des feuilles de verte, sans contact physique, au moyen d'un dispositif de manutention comprenant au moins un corps (2) comportant une paroi pourvue d'une surface de portée (16), une circonférence périphérique libre (19) et au moins un conduit d'amenée (15) pour l'amenée d'un courant de gaz ou de vapeur sous pression jusqu'à un trou (8) ménagé dans la surface de portée (16), ledit procédé comprenant les étapes consistant à approcher étroitement la surface de portée (16) du dispositif de manutention jusqu'à la surface supérieure (14) de la feuille de verte (6) pour établir un intervalle (11) de faible épaisseur entre les surfaces (14, 16), et à diriger un courant de gaz sous pression à travers le conduit (15) et le trou (8) contre la surface supérieure (14) de la feuille de verte (6), caractérisé en ce que, du fait de la diminution soudaine de la section transversale du courant de gaz quittant le conduit d'amenée (15) et pénétrant dans l'intervalle (11) à travers le trou (8) de la surface de portée (16), la vitesse du courant de gaz se trouve augmentée de façon énergique avec une diminution énergique résultante de la pression d'écoulement du gaz, et en ce qu'ensuite on laisse le courant de gaz s'écouler à travers l'intervalle (11) en direction de la circonférence du corps (2) qui communique avec la pression atmosphérique, grâce à quoi la pression d'écoulement du gaz augmente jusqu'à la valeur de la pression atmosphérique à mesure que la section transversale du courant de gaz augmente, avec une diminution concomitante de sa vitesse, et grâce à quoi à l'intérieur de l'intervalle (11) s'établit une pression moyenne d'écoulement de gaz qui est inférieure à la pression atmosphérique, de sorte qu'une force d'aspiration est appliquée à la feuille de verte (6) par le dispositif de manutention.

2. Procédé selon la revendication 1, caractérisé en ce que l'on utilise un gaz sous pression, particulièrement de l'air comprimé, ayant une température différente de la température de la feuille de verte devant être manutentionnée.

3. Procédé selon la revendication 1, caractérisé en ce que l'on dirige sur la face inférieure de la feuille de verte des jets de gaz supplémentaires.

4. Dispositif pour manutentionner des feuilles de verre par le dessus afin de mettre en oeuvre le procédé selon une ou plusieurs des revendications précédentes, comprenant au moins un corps (2) comportant une paroi pourvue d'une surface de portée (16), une circonférence périphérique libre (19) et au moins un conduit d'amenée (15) pour amener un courant de gaz ou de vapeur sous pression jusqu'à un trou (8) ménagé dans la surface de portée (16), caractérisé en ce que la distance (rₑ) entre l'axe du trou (8) et la circonférence périphérique (19) de la surface de portée (16) du corps (2) est sensiblement plus grande que la distance (rᵢ) entre ledit axe du trou (8) et la circonférence (9) du trou (8) et en ce que la circonférence périphérique (19) est en communication libre avec la pression atmosphérique, le dispositif comprenant en outre un moyen pour abaisser et soulever le corps (2).

5. Dispositif selon la revendication 4, caractérisé en ce que le corps est un disque (2) comportant un trou (8) situé au voisinage du centre de sa surface de portée (16).

6. Dispositif selon la revendication 5, caractérisé en ce que la surface de portée (16) du disque (2) est plate ou a une forme légèrement tronconique.

7. Dispositif selon la revendication 5, caractérisé en ce que le disque (2) et/ou le trou (8) ont une forme circulaire ou polygonale ou elliptique.

8. Dispositif selon la revendication 4, caractérisé en ce que le trou (8) comporte un chanfrein tronconique (81).

9. Dispositif selon la revendication 8, caractérisé en ce qu'au voisinage du trou (8) se trouve un écran de déviation (24).

10. Dispositif selon la revendication 4, caractérisé en ce que dans une plaque (37) sont formés une pluralité de corps (2) et en ce qu'entre les circonférences périphériques des corps (2) sont formés des canaux (31) d'évacuation du gaz qui communiquent avec la pression atmosphérique et en ce que les surfaces de portée (16) des corps (2) se trouvent dans le même plan.

11. Dispositif selon la revendication 10, caractérisé en ce que des éléments de butée (33), associés à la plaque (37), sont présents pour agir sur les côtés de la feuille à manutentionner, lesdits éléments de butée (33) étant fixes ou mobiles dans une direction perpendiculaire et/ou parallèle au plan des surfaces de portée (16) des corps (2).

12. Dispositif selon la revendication 4, caractérisé en ce qu'un ensemble de corps (2) est prévu, chacun desdits corps étant formé sur l'extrémité de la tige (1) d'un piston (3) pouvant se déplacer dans un cylindre pneumatique (5), la tige (1) et le piston (3) étant creux pour établir une communication entre le trou (8) du corps (2) et une première chambre du cylindre (5) située en face de la chambre dans laquelle la tige (1) peut se déplacer et dans laquelle un moyen (7) exerçant une contre-pression est inséré, la première chambre du cylindre (5) pouvant être alimentée avec un gaz sous pression.
